# EUROPÄISCHE PATENTSCHRIFT

(11) **EP 1 790 424 B1**
(45) Veröffentlichungstag und Bekanntmachung des Hinweises auf die Patenterteilung: **22.10.2008**
(21) Anmeldenummer: 06124153.5
(22) Anmeldetag: 15.11.2006
(51) Int. Cl.: B23B 31/00, B23Q 3/12, B25D 17/08

(54) **Werkzeugaufnahme**
Tool holder
Porte-outil

(30) Priorität: 25.11.2005 DE 102005000168
(43) Veröffentlichungstag der Anmeldung: 30.05.2007
(73) Patentinhaber: HILTI Aktiengesellschaft, 9494 Schaan (LI)
(72) Erfinder: Manschitz, Erwin, 82110 Germering (DE); Hauptmann, Udo, 86899 Landsberg (DE)
(74) Vertreter: Wildi, Roland

(56) Entgegenhaltungen:
- EP-A1- 0 976 506
- WO-A-02/24403
- DE-U1- 29 612 795
- GB-A- 2 174 934

## Beschreibung

Die Erfindung bezeichnet eine Werkzeugaufnahme, die über radial versetzbar eingreifende Verriegelungselemente mit einer Werkzeugspindel lösbar verbindbar ist, insbesondere eine Schlagwerkzeugaufnahme für einen Kombihammer.

Üblicherweise wird eine Schlagwerkzeugaufnahme mit einer drehenden Werkzeugspindel über eine Führungshülse mit Öffnungen für radial versetzbar in die Werkzeugspindel eingreifende Verriegelungselemente lösbar verbunden, die über eine händisch axial versetzbare Verriegelungshülse radial verriegelt werden. Nach der US2003188877 erfolgt bei einer derartigen Schlagwerkzeugaufnahme die Verriegelung mit Stahlkugeln und die Drehmomentübertragung von der Werkzeugspindel zur Schlagwerkzeugaufnahme durch eine passend ineinander eingreifende Radialverzahnung. Im axial schlagenden Betriebsmodus werden die in den Öffnungen eng begrenzt axial freien Stahlkugeln der Werkzeugaufnahme zu starken Axialschwingungen angestossen, wodurch durch diese sporadisch hohe Kräfte freigesetzt werden, die die Werkzeugaufnahme ermüden können.

Zudem ist nach der EP0976506 eine Werkzeugaufnahme mit Verriegelungselementen für das Werkzeug vorbekannt, welche als Kippsegmente mit einem axial fest gelagerten Lagerteil sowie mit einem radial in die Öffnung der Führungshülse eindringenden, kippbaren Verriegelungsteil ausgebildet sind.

Zudem ist nach der DE29612795U bei einer Schlagwerkzeugaufnahme ein loser, radial kippbarer Verriegelungskörper zum Eingriff in Verriegelungsnuten des axial begrenzt beweglichen Schlagwerkzeugs mit einer händisch axial versetzbaren Verriegelungshülse kombiniert. Die Drehmomentübertragung zum Schlagwerkzeug erfolgt nicht über den Verriegelungskörper sondern über Drehmitnahmestege, die in Drehmitnahmenuten des Schlagwerkzeugs eingreifen.

Die Aufgabe der Erfindung besteht in der Realisierung einer für den schlagenden Betriebsmode geeigneten Werkzeugaufnahme. Ein weiterer Aspekt besteht in einer Vereinfachung der Komplexität der Werkzeugaufnahme.

Die Aufgabe wird im Wesentlichen durch die Merkmale des Anspruchs 1 gelöst. Vorteilhafte Weiterbildungen ergeben sich aus den Unteransprüchen.

So weist eine Werkzeugaufnahme, die mit einer Werkzeugspindel lösbar verbindbar ist, eine Führungshülse mit Öffnungen für mehrere radial versetzbar in die Werkzeugspindel eingreifbare Verriegelungselemente sowie eine händisch versetzbare Verriegelungshülse auf, welche die Verriegelungselemente radial verriegelt, wobei diese als Kippsegmente ausgebildet sind mit einem axial fest gelagerten Lagerteil sowie mit einem radial kippbar in die Öffnung der Führungshülse eindringenden Verrieglungsteil. Dabei sind alle Kippsegmente ringförmig miteinander zu einem einteiligen Kippsegmentring verbunden, weiter vorteilhaft an einem der Ringnut der Führungshülse passend zugeordneten Kreisring angeformt, wodurch bezüglich mehrerer einzelner Verriegelungskörper die Anzahl der Bauteile und die Anzahl der Monatageschritte der Werkzeugaufnahme verringert ist.

Durch die axial fest gelagerten und nur radial kippbar ausgebildeten Verriegelungselemente wird eine freie Axialschwingung praktisch verhindert. Die zum Quadrat der Schwingungsamplitude proportionale Schwingungsenergie ist somit wesentlich geringer.

Vorteilhaft weist das Kippsegment an dem Lagerteil im Längsschnitt einen Kreissektor (im Längsschnitt betrachtet) auf, wodurch diese in einer passend zugeordneten Ringnut der Führungshülse axial fest sowie radial kippbar lagerbar ist.

Vorteilhaft bildet das Kippsegment radial aussen eine radial abgesetzte Gleitfläche aus, wodurch diese über eine händische Versetzung einer passend zugeordneten radial abgesetzte Verriegelungsfläche der Verriegelungshülse in zwei Kippstellungen verriegelbar ist.

Vorteilhaft ist die Verriegelungshülse federnd vorgespannt, wodurch die Kippstellung zum Lösen der Werkzeugaufnahme von der Werkzeugspindel instabil ausgebildet ist.

Vorteilhaft ist die Verriegelungshülse axial versetzbar, wodurch die Verbindung der Werkzeugaufnahme mit der Werkzeugspindel händisch einfach lösbar ist, insbesondere ohne Dreharretierung der Werkzeugspindel.

Vorteilhaft bildet das Kippsegment im Verriegelungsteil zumindest eine nach radial innen orientierte Kegelstumpfmantelfläche aus, die in eine passend zugeordnete Innenkegelstumpfmantelfläche der Werkzeugspindel eindrückbar ist, wodurch sowohl in axialer als auch in tangentialer Richtung je eine Flächenpressung ausgebildet wird, die mit geringen lokalen Materialbeanspruchungen hohe Kräfte zu übertragen gestattet.

Vorteilhaft ist das Kippsegment aus Kunststoff ausgebildet, weiter vorteilhaft aus einem schlagfesten und hochtemperaturbeständigen Kunststoff wie Polyarylat (PAR), wodurch sich beim Eindrücken in die passend zugeordnete Innenkegelstumpfmantelflächen einer Werkzeugspindel aus Metall eine verschleissarme Hochlage-Tieflage Paarung ergibt, welche tribologisch günstig ist. Da Kunststoff eine bezüglich Metall wesentlich höhere Schwingungsdämpfung aufweist, wird eine harte Stossimpulsübertragung von der Werkzeugaufnahme auf die Führungshülse über die Kippsegment unterbrochen. Zudem werden Stossimpulse bei einem Kippsegment aus Kunststoff nur geringe Eigenschwingungsamplituden anregen können.

Die Erfindung wird bezüglich eines vorteilhaften Ausführungsbeispiels näher erläutert mit einem Längschnitt durch eine Werkzeugaufnahme.

Nach der Darstellung weist eine, mit einer um die Achse A drehend antreibenden hohlen Werkzeugspindel 1 lösbar verbundenen, Schlagwerkzeugaufnahme 2 eine Führungshülse 3 mit Öffnungen 4 für mehrere umfänglich verteilte, radial versetzbar in die Werkzeugspindel 1 eingreifbare Verriegelungselemente in Form von Kippsegmenten 5 sowie eine händisch versetzbare Verriegelungshülse 6 auf, welche die Kippsegmente 5 radial verriegelt. Die Kippsegmente 5 sind mit einem axial fest gelagerten Lagerteil 7 sowie mit einem radial kippbar in die Öffnung 4 der Führungshülse 3 eindringenden Verrieglungsteil 8 ausgebildet, wobei im Längsschnitt betrachtet das Lagerteil 7 einen Kreissektor 19 ausbildet, welches in einer passend zugeordneten Ringnut 9 der Führungshülse 3 axial fest sowie radial kippbar gelagert ist. Radial aussen bildet das Kippsegment 5 eine radial abgesetzte Gleitfläche 10 aus, welche über eine händische Versetzung einer passend zugeordneten radial abgesetzte Verriegelungsfläche 11 der Verriegelungshülse 6 in den beiden Kippstellungen <Verriegelungsstellung> und <Entriegelungsstellung> verriegelbar ist, wobei im oberen Halbbild die <Verriegelungsstellung> und im unteren Halbbild die <Entriegelungsstellung> dargestellt sind. In der <Verriegelungsstellung> ist die axial versetzbare Verriegelungshülse 6 stabil mit einer werkzeugseitigen Spiralfeder 12 axial federnd gegen einen Axiananschlag 13 vorgespannt. Das aus schlagfesten und hochtemperaturbeständigen Polyarylat (PAR) Kunststoff ausgebildete Kippsegment 5 bildet im Verrieglungsteil 8 zwei nach radial innen orientierte Kegelstumpfmantelflächen 14a, 14b aus, die in der <Verriegelungsstellung> in je eine passend zugeordnete Innenkegelstumpfmantelfläche 15a, 15b der Führungshülse 3 und in Ausnehmungen 1a der ansonsten zylindermantelförmig glatten Werkzeugspindel 1 aus Metall eingedrückt sind und somit neben den Axialkräften auch das gesamte Drehmoment überträgt, sowie eine Übertragung von Stossimpulsen eines in der Schlagwerkzeugaufnahme 2 axial schlagend geführten Schlagwerkzeugs 16 auf die Werkzeugspindel 1 entkoppelt. Alle Kippsegmente 5 sind zu einem einteiligen Kippsegmentring 17 verbunden, indem sie an einem der Ringnut 9 der Führungshülse passend zugeordneten Kreisring 18 angeformt, ringförmig miteinander verbunden und über dessen Verdrillung elastisch kippbar sind.

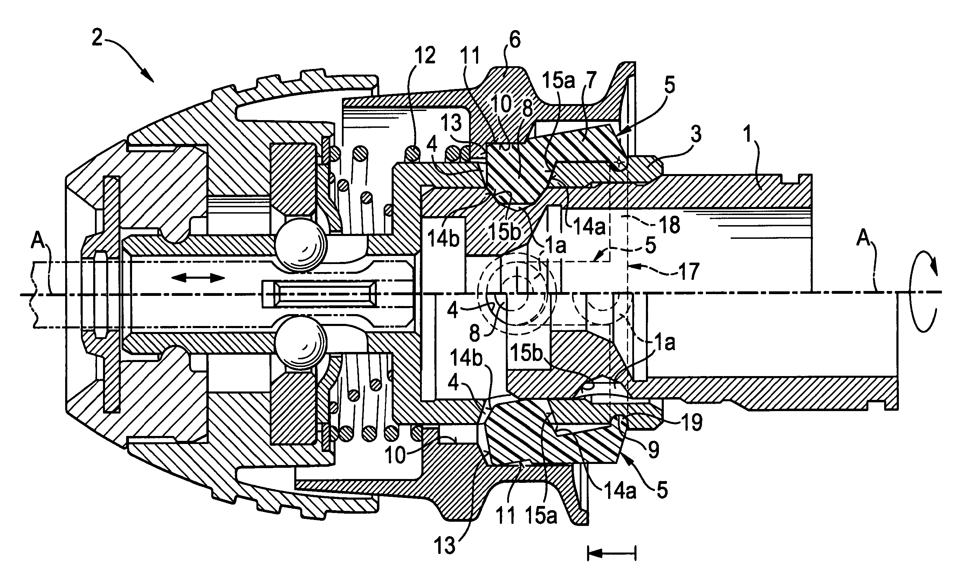

## Patentansprüche

1. Werkzeugaufnahme, die mit einer Werkzeugspindel (1) lösbar verbindbar ist, mit einer Führungshülse (3) mit Öffnungen (4) für mehrere radial versetzbar in die Werkzeugspindel (1) eingreifbare Verriegelungselemente sowie mit einer händisch versetzbaren Verriegelungshülse (6), welche die Verriegelungselemente radial verriegelt, **dadurch gekennzeichnet, dass** die Verriegelungselemente als Kippsegmente (5) ausgebildet sind mit einem axial fest gelagerten Lagerteil (7) sowie mit einem radial kippbar in die Öffnung (4) der Führungshülse (3) eindringenden Verrieglungsteil (8), und dass alle Kippsegmente (5) ringförmig miteinander zu einem einteiligen Kippsegmentring (17) verbunden sind.

2. Werkzeugaufnahme nach Anspruch 1, **dadurch gekennzeichnet, dass** das Kippsegment (5) an dem Lagerteil (7) einen Kreissektor (19) ausbildet.

3. Werkzeugaufnahme nach Anspruch 1 oder 2, **dadurch gekennzeichnet, dass** das Kippsegment (5) radial aussen eine radial abgesetzte Gleitfläche (10) ausbildet.

4. Werkzeugaufnahme nach einem der Ansprüche 1 bis 3, **dadurch gekennzeichnet, dass** die Verriegelungshülse (6) federnd vorgespannt ist.

5. Werkzeugaufnahme nach einem der Ansprüche 1 bis 4, **dadurch gekennzeichnet, dass** die Verriegelungshülse (6) axial versetzbar ist.

6. Werkzeugaufnahme nach einem der Ansprüche 1 bis 5, **dadurch gekennzeichnet, dass** das Kippsegment (5) im Verriegelungsteil (8) zumindest eine nach radial innen orientierte Kegelstumpfmantelfläche (14b) ausbildet, die in eine passend zugeordnete Innenkegelstumpfmantelfläche (15b) der Werkzeugspindel (1) eindrückbar ist.

7. Werkzeugaufnahme nach einem der Ansprüche 1 bis 6, **dadurch gekennzeichnet, dass** das Kippsegment (5) aus Kunststoff ausgebildet ist.

## Claims

1. Tool chuck releasably connectable to a tool spindle (1), having a guide sleeve (3) with openings (4) for a plurality of radially displaceable locking means which can engage in the tool spindle (1), and also having a manually displaceable locking sleeve (6) which radially locks the locking means, **characterised in that** the locking means are made as tilting segments (5) having a mounting part (7) that is mounted fixed axially and also having a locking part (8) which can be tilted radially to penetrate into the opening (4) of the guide sleeve (3), and **in that** all the tilting segments (5) are connected together in a ring to form a one-piece segment ring (17).

2. Tool chuck according to claim 1, **characterised in that** the tilting segment (5), at the mounting part (7), is made as a sector of a circle.

3. Tool chuck according to claim 1 or 2, **characterised in that** the tilting segment (5) is made, radially outwardly, with a radially offset sliding surface (10).

4. Tool chuck according to one of claims 1 to 3, **characterised in that** the locking sleeve (6) is pre-loaded by spring action.

5. Tool chuck according to one of claims 1 to 4, **characterised in that** the locking sleeve (6) is displaceable axially.

6. Tool chuck according to one of claims 1 to 5, **characterised in that** the tilting segment (5), at its locking part (8), is made with at least one truncated cone outer surface (14b) directed radially inward, which can be pushed into an associated matching truncated cone inner surface (15b) of the tool spindle (1).

7. Tool chuck according to one of claims 1 to 6, **characterised in that** the tilting segment (5) is made of plastics.

## Revendications

1. Raccord d'outil apte à être relié de manière détachable à une broche porte-outil (1), comprenant un manchon de guidage (3) pourvu d'ouvertures (4) pour plusieurs éléments de verrouillage aptes à s'engager par translation radiale dans la broche porte-outil (1) ainsi qu'un manchon de verrouillage déplaçable manuellement (6), lequel verrouille radialement les éléments de verrouillage, **caractérisé en ce que** les éléments de verrouillage sont conformés en segments basculants (5) comportant une partie d'appui immobilisée axialement (7) ainsi qu'une partie de verrouillage (8) pénétrant par basculement radial dans l'ouverture (4) du manchon de guidage (3), et **en ce que** tous les segments basculants (5) sont reliés entre eux de manière annulaire sous la forme d'un anneau monobloc de segments basculants (17).

2. Raccord d'outil selon la revendication 1, **caractérisé en ce que** le segment basculant (5) forme un secteur de cercle (19) sur la partie d'appui (7).

3. Raccord d'outil selon la revendication 1 ou 2,
**caractérisé en ce que** le segment basculant (5) forme, sur son côté radialement extérieur, une surface de glissement en décrochement radial (10).

4. Raccord d'outil selon une des revendications 1 à 3, **caractérisé en ce que** le manchon de verrouillage (6) est à précontrainte élastique.

5. Raccord d'outil selon une des revendications 1 à 4, **caractérisé en ce que** le manchon de verrouillage (6) est déplaçable axialement.

6. Raccord d'outil selon une des revendications 1 à 5, **caractérisé en ce que**, dans la partie de verrouillage (8), le segment basculant (5) forme au moins une surface périphérique tronconique orientée radialement vers l'intérieur (14b), laquelle peut être engagée dans une surface périphérique tronconique intérieure correspondante (15b) de la broche porte-outil (1).

7. Raccord d'outil selon une des revendications 1 à 6, **caractérisé en ce que** le segment basculant (5) est réalisé en matière plastique.
